Europäisches Patentamt

European Patent Office

Office européen des brevets

(19)

(11) Veröffentlichungsnummer: **0 207 150**
**B1**

(12) **EUROPÄISCHE PATENTSCHRIFT**

(45) Veröffentlichungstag der Patentschrift:
20.09.89

(21) Anmeldenummer: 86900658.5

(22) Anmeldetag: 10.12.85

(86) Internationale Anmeldenummer:
PCT/EP 85/00689

(87) Internationale Veröffentlichungsnummer:
WO/8604009 (17.07.86 Gazette 86/17)

(51) Int. Cl.⁴: **B 25 J 9/04**, B 25 J 9/10,
B 25 J 19/00, B 25 J 17/00

(54) INDUSTRIE-ROBOTER FÜR UNTERSCHIEDLICHE EINSATZZWECKE.

(30) Priorität: 28.12.84 DE 3447701

(43) Veröffentlichungstag der Anmeldung:
07.01.87 Patentblatt 87/02

(45) Bekanntmachung des Hinweises auf die Patenterteilung: 20.09.89 Patentblatt 89/38

(84) Benannte Vertragsstaaten:
AT BE CH DE FR GB IT LI NL SE

(56) Entgegenhaltungen:
EP--A-- 0 054 763
EP--A-- 0 078 522
EP--A-- 0 096 634
EP--A-- 0 118 845
DE--A-- 2 228 598
DE--A-- 3 310 107
DE--A-- 3 326 962
FR--A-- 2 155 848
FR--A-- 2 560 805
GB--A-- 2 135 230
US--A-- 4 235 567
US--A-- 4 505 166

(73) Patentinhaber: KUKA Schweissanlagen & Roboter GmbH
Blücherstrasse 144
D-8900 Augsburg (DE)

(72) Erfinder: ZIMMER, Ernst
Michael-Steinherr-Strasse 34
D-8904 Friedberg (DE)
Erfinder: BINDER, Karl
Gunzenleestrasse 20a
D-8901 Kissing (DE)

(74) Vertreter: Ernicke, Hans-Dieter, Dipl.-Ing.
Schwibbogenplatz 2b
D-8900 Augsburg (DE)

Jouve, 18, rue St-Denis, 75001 Paris, France

## Beschreibung

Die Erfindung bezieht sich auf einen Industrie-Roboter (Manipulator) für unterschiedliche Einsatzzwecke mit den im Oberbegriff des Hauptanspruches angegebenen Merkmalen.

Bei vorbekannten Industrie-Robotern entsprechend der DE-A-31 15 061 befindet sich der Schwenkantrieb für die Schwinge im Gestell, wobei die Schwinge über ein Gegengewicht ausbalanciert ist. Dieser Industrie-Roboter ist für die Handhabung schwerer Lasten ausgelegt und in erster Linie als Schweißroboter konzipiert.

Bei einem Industrie-Roboter nach der FR-A-2 155 848 ist der Antriebsmotor für die Schwingen-Schwenkbewegung an der Schwinge befestigt. Sein Antriebsritzel wälzt sich an einem mit dem Gestell verbundenen, also ortsfesten Zahnrad ab.

Industrie-Roboter werden jedoch in zunehmendem Maße auch für Montagezwecke eingesetzt und dafür in größerer Anzahl beschafft. Für diese Einsatzzwecke, bei denen im allgemeinen relativ geringe Lasten zu handhaben sind, können die Industrie-Roboter zwar leichter gebaut sein, müssen jedoch wegen der größeren Anzahl dafür aber wirtschaftlicher bzw. kostengünstiger sein als die bisher bekannten Roboter.

Die bekannten Industrie-Roboter können für den genannten Zweck nicht sinnvoll eingesetzt werden, da sie als Einzelkonstruktionen für einen bestimmten Zweck konzipiert sind und nicht ohne weiteres und kostengünstig für verschiedene Zwecke umgerüstet werden können.

Es ist daher Aufgabe der vorliegenden Erfindung, einen Industrie-Roboter zu entwickeln, der an die unterschiedlichsten Einsatzzwecke unter Wahrung der Wirtschaftlichkeit angepaßt werden kann.

Die Erfindung löst diese Aufgabe mit den Merkmalen im Kennzeichnungsteil des Hauptanspruches.

Dieser Lösung liegt der Gedanke zugrunde, den Industrie-Roboter in Modulbauweise aufzubauen und damit dem jeweiligen Einsatzzweck optimal anzupassen. Als Kernmodul, das für alle Einsatzzwecke gleichbleibt und damit in entsprechend großer Stückzahl wirtschaftlich hergestellt werden kann, ist die Schwinge vorgesehen. Die Schwinge wird dann je nach Einsatzzweck mit unterschiedlichen Gestellen und/oder Auslegern verbunden. Durch die Verlegung des Antriebsmotors des Schwingen-Schwenkantriebs in die Schwinge selbst kann das Gestell einfacher und damit billiger konzipiert werden.

Insgesamt gesehen erfolgt eine Normierung der Schnittstellen zwischen Gestell und Schwinge einerseits sowie Schwinge und Ausleger andererseits mit der Folge, daß Ausleger und Gestell unabhängig voneinander ebenfalls als Baugruppenteile konzipiert und dann über die Schwinge miteinander kombiniert werden können. Die optimal an den Einsatzzweck angepaßten Roboter besitzen dabei auch nur die genau benötigte Anzahl und Art von Achsen, was für die Wirtschaftlichkeit in einem hohen Maße mitbestimmend ist. Die durch die Schwingenkonstruktion ermöglichte Modulbauweise erlaubt damit auch ein kostengünstiges nachträgliches Umrüsten der erfindungsgemäßen Industrie-Roboters für andere Einsatzzwecke.

Die vorgenannten Vorteile kommen nicht nur bei einem Baukastensystem zum tragen, sondern auch bei einem für universelle Einzelfertigung konzipierten, z. B. 6-achsigen Industrie-Roboter. Die Verlegung der Schwenkantriebe von Schwinge und Ausleger in die Schwinge vereinfacht auch die Konstruktionsvorgaben für Ausleger und Gestell, was sich auch bei einer Einzelkonstruktion kostengünstig auswirkt.

Soweit die Schwenkantriebe von Schwinge und Ausleger ein Getriebe aufweisen, können Teile des Getriebes mit entsprechender Normierung auch im Gestell bzw. im Ausleger untergebracht werden. Besonders kostengünstig ist es jedoch, wenn die Schwinge als Komplett-Bauteil die genannten Schwenkantriebe vollständig aufnimmt und von der Schwinge nur die Abtriebsglieder der beiden Schwenkantriebe nach außen weisen.

In den gezeigten Ausführungsbeispielen, die besonders wirtschaftlich sind, sind die Abtriebsglieder als normierte Radflansche mit einer Zentrierung ausgebildet, die mit Gestell und Ausleger nur noch verschraubt zu werden braucht. Kommen in Variation dazu Planetenradgetriebe oder dgl. zum Einsatz, kann beispielsweise als Abtriebsglied das äußere Hohlrad oder der Planetenträger vorgesehen und mit Gestell bzw. Ausleger verbunden sein.

Die Schwenkantriebe von Schwinge und Ausleger können in unterschiedlichster Weise ausgebildet sein. So kann beispielsweise ein Getriebemotor vorgesehen sein, der ein eigenes Untersetzungsgetriebe unnötig macht und damit direkt auf der jeweiligen Schwenkachse sitzt. Aus Gründen der Spielfreiheit und der genauen Steuerung des Schwenkantriebes ist es jedoch vorteilhaft, den Schwenkantrieb jeweils aus einem Antriebsmotor und einem zumindest zweistufigen Getriebe zu bilden und dabei als erste Getriebestufe einen Zahnriementrieb vorzusehen. Die zweite Getriebestufe kann entsprechend den gezeigten Ausführungsbeispielen ebenfalls ein Zahnriementrieb oder auch ein Zahnradgetriebe sein. Desgleichen kann auch das gesamte Getriebe als Zahnradgetriebe ausgebildet sein.

Die Anordnung von jeweils zwei Zahnriementrieben mit einer Zwischenwelle, die in einer gemeinsamen Ebene hintereinander angeordnet sind, hat dabei den weiteren Vorteil einer kleinen Baugröße des Schwingengehäuses. Im weiteren erleichtert diese Anordnung auch die erfindungsgemäße Ausbalancierung der Schwinge hauptsächlich durch die Anordnung der Antriebsmotore. Je nach Last der unterschiedlichen Ausleger mit ihren Werkzeugen können Zusatzgewichte für die Balancierung der Schwinge um ihre Schwenkachse benutzt werden. Desgleichen ist es auch möglich, die Schwinge hauptsächlich durch Zusatzgewichte an Kurbelarmen angreifende Federn oder mit Druckmedien beaufschlagte Zylinder o. dgl., auszubalancieren. Die Zweistufigkeit des Schwenkantriebgetriebes bringt auch Vorteile hinsichtlich des Weggebers mit sich. Um den Fehlereinfluß von fortgeschalteten Getriebetoleranzen zu eliminieren, sollte der Weggeber möglichst nahe an der Abtriebsseite sitzen. Beim Schwenkantrieb der Schwinge selbst stellt das mit dem Gestell drehstarr verbundene Abtriebsglied den je nach Gestellausführung relativ oder absolut ortsfesten Bezugspunkt dar, um den sich das Getriebe unter Mitnahme der Schwinge abwälzt. Dementsprechend bildet die Zwischenwelle das abtriebsseitig letzte bewegte Bauteil, an dem vorteilhafterweise der Weggeber angebracht ist. Aus Gründen gleichbleibender Konstruktion empfiehlt es sich, den Weggeber auch auf der Zwischenwelle des Auslager-Schwenkabtriebs anzuordnen, obgleich hier das Abtriebsgleid das letzte bewegte Getriebeglied ist.

Die erwähnte Getriebekonzeption bringt das Teilproblem mit sich, zweistufig ausgebildete Zahnriementriebe ordnungsgemäß zu spannen. Bei der ersten Getriebestufe liegt es nahe, daß der Antriebsmotor verstellbar angeordnet ist und daher den Zahnriemen der ersten Getriebestufe spannen läßt. Bei der zweiten Getriebestufe ist dies problematischer. Hierzu schlägt die Erfindung vor, die Zwischenwelle in einem gegenüber dem Gehäuse exzentrisch verstellbaren Gehäuseteil zu lagern und die exzentrische Verstellung als Mittel zum Spannen des zweiten Zahnriemens vorzusehen.

Andererseits bietet die Erfindung aber die Möglichkeit, die jeweils zweite Getriebestufe mit einer an sich vorgeschlagenen Anordnung zum Spielausgleich der Verzahnung in Verbindung mit geteilten, gegeneinander torsionsverspannten Antriebsritzeln auszustatten. Ein solcher Vorschlag ergibt sich beispielsweise aus den älteren Patentanmeldung P 31 15 061 und P 33 08 413. Auf den Inhalt dieser älteren Anmeldungen wird hingewiesen. Danach ist es insbesondere auch zweckmäßig, die jeweils letzte Getriebestufe als eine sogenannte Stahlstufe auszubilden, mit der schwingungstechnische Probleme bei Ausübung schneller Bewegungen mit hohen Gewichten zuverlässig bewältigt werden können.

Es empfiehlt sich, die Abtriebsglieder der Schwenkantriebe für die Schwinge und den Ausleger hohl auszubilden. Damit wird ein Durchlaß für die Anordnung von Kraft- und Steuerleitungen, Werkzeuge und dgl. gebildet, was wiederum dazu führt, daß tatsächlich im Sinne der Modulbauweise eine kompakte Bauart entsteht, bei der die Energiezufuhr nicht durch Getriebetechnik behindert wird. Der mechanischen Flanschschnittstelle der Module ist jeweils auch eine Stecker- oder Klemmleistenschnittstelle der elektrischen Leitungen zugeordnet.

Die fliegende Lagerung von Ausleger und Schwinge bringt den Vorteil einer einfachen kostengünstigen Konstruktion und eines weiten Arbeitsbereiches des Industrie-Roboters mit sich. Nachdem der erfindungsgemäße Industrie-Roboter auch für die Handhabung schwerer Lasten geeignet ist, können zur Abstützung dieser Lasten auch beidseitige Gabellagerungen oder dgl. zur Anwendung kommen.

Die beiden fliegenden Lagerungen bringen allerdings auch Vorteile hinsichtlich der kostengünstigen Modulbauweise mit sich. Damit ist nämlich eine freie Wahl der Lage der Achsen möglich, um die die Schwinge gegenüber dem Gestell und der Ausleger gegenüber der Schwinge schwenken.

Die Anordnung der Antriebsmotoren auf der einen Seite und der fliegenden Lagerungen auf der anderen Seite der Schwinge hat den Vorteil, daß damit eine leichte Ausbalancierung der Schwinge durch die Antriebsmotoren ohne Beeinflussung des Arbeitsbereichs des Industrie-Roboters möglich ist.

Im Sinne der Wirtschaftlichkeit und der Modulbauweise kommt es auch darauf an, den Ausleger möglichst klein und entsprechend leicht zu bauen. Nachdem die Lagerstellen von Ausleger und Schwinge sowie von Schwinge und Gestell auf der gleichen Seite der Schwinge angeordnet sind, darf der Ausleger nur eine begrenzte Länge haben. Der Ausleger soll dabei aber, genauso wie die Schwinge, gegenüber seiner Schwenkachse ausbalanciert sein. Zur Lösung dieses Problems ist es aus der DE-OS 30 48 067 bekannt, die Antriebsmotoren für den Handwurzelantrieb jenseits der Schwenkachse des Auslegers anzuordnen. Aus Platzgründen sind die Antriebsmotoren dabei weiter voneinander distanziert, als die von ihnen getriebenen Hohlwellen. Zur Lösung dieses Problems ist es aus der genannten DE-OS bekannt, die jeweilige Hohlwelle mit ihrem zugeordneten Antriebsmotor über eine Zwischenwelle mit zwei Kardanlagern zu verbinden. Dies wiederum erhöht allerdings die Baulänge des Auslegers beträchtlich.

Zur Lösung dieses Problems wird erfindungsgemäß vorgeschlagen, die Antriebsmotoren fächerartig anzuordnen, so daß nur noch kurze, gerade Zwischenwellen nötig sind, die die Antriebsmotoren mit den entsprechenden Kegelradgetrieben an den jeweils zugeordneten Hohlwellen verbinden. Diese Konstruktion hat neben der Längenverkürzung den weiteren Vorteil, daß eine einfache Steckverbindung zwischen den Antriebsmotoren und ihren Zwischenwellen vorgesehen sein kann, die einen einfachen Austausch der Antriebsmotoren ermöglicht. Die erfindungsgemäße Ausbildung des Auslegers kann mit Vorteil auch bei anderen als den erfindungsgemäß ausgebildeten Industrie-Robotern Verwendung finden.

Einzelheiten der Erfindung ergeben sich aus der Zeichnung. In ihr ist die Erfindung schematisch und beispielsweise dargestellt. Es zeigt:

Fig. 1 eine Seitenansicht auf einen Industrie-Roboter (Manipulator) mit um horizontale Achsen verschwenkbarer Schwinge und Ausleger,

Fig. 2 eine Seitenansicht auf einen Industrie-Roboter mit um vertikale Achsen verschwenkbarer Schwinge und Ausleger,

Fig. 3 einen Horizontalschnitt längs der Linie III-III der Anordnung gemäß Fig. 1,

Fig. 4 einen Längsschnitt durch eine Variante zu Fig. 3,

Fig. 5 eine Seitenansicht des Auslegers und

Fig. 6 einen Vertikalschnitt durch den Ausleger gemäß Fig. 5.

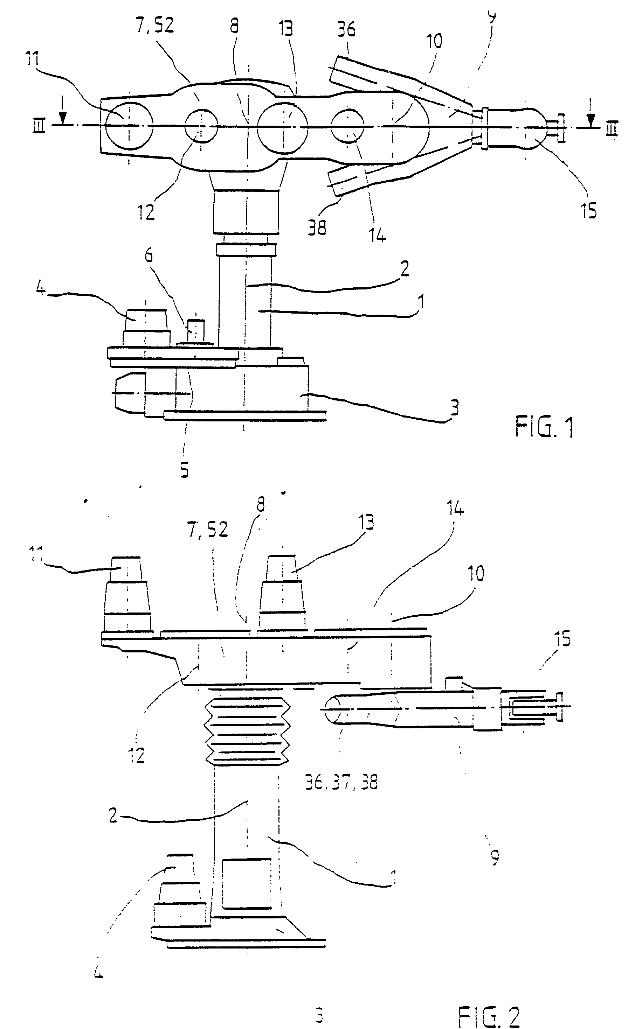

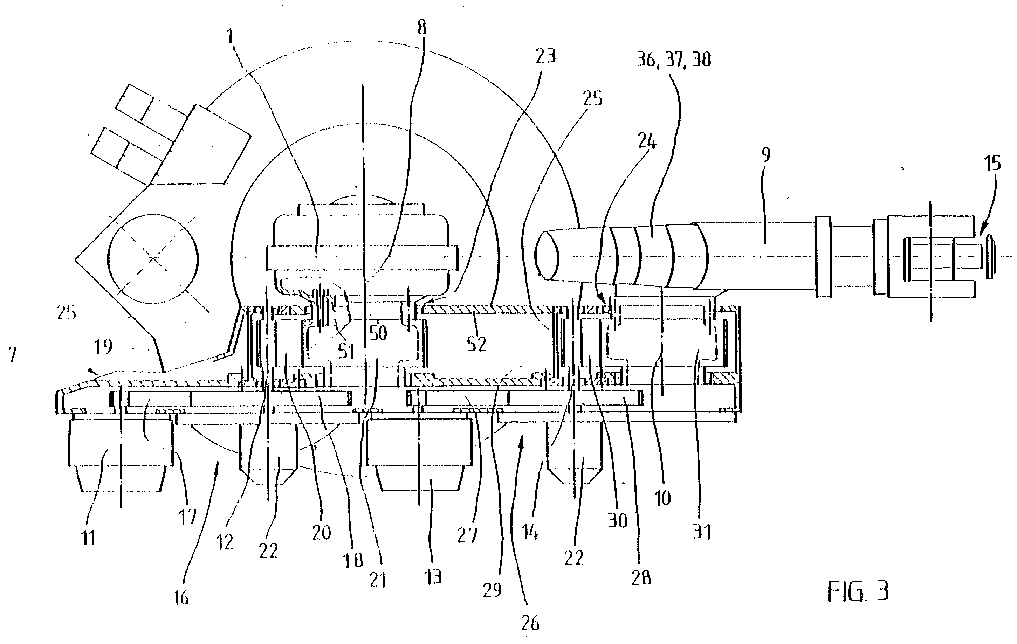

In den Beispielen der Fig. 1 und 2 werden grundsätzliche Konzeptionen eines Industrie-Roboters (Manipulator) gezeigt, die erkenntlich machen, daß der erfindungsgemäße Grundgedanke in verschiedenen Varianten ausgeführt werden kann, ohne daß alle Varianten der Erfindung dargestellt sind.

In beiden Fällen ist das Gestell 1 als aufrechte Säule ausgebildet, die um eine vertikale Achse 2 an einem Bodenteil 3 drehbar angeordnet ist. Die Säule 1 wird von einem Antriebsmotor 4 angetrieben, wobei im Falle der Fig. 1 ein mehrstufiges Getriebe zum Antrieb der Säule 1 verwendet wird, welches durch die symbolisch dargestellte Zwischenwelle 5 und einen Weggeber 6 gekennzeichnet wird. Dieser Weggeber 6 hat die an sich bekannte Aufgabe, steuertechnische Impulse auf den Schwenkantrieb abzugeben.

Am oberen Ende der Säule 1 ist im Ausführungsbeispiel der Fig. 1 eine Schwinge 7 um eine horizontale Schwenkachse 8 gelagert. An dieser Schwinge 7 ist über die Schwenkachse 10 ein Ausleger 9 gelagert, der an seinem freien Ende eine sogenannte Hand 15 trägt, mit deren Hilfe unter Verwendung von einer oder mehreren Achsen die Spezialbewegungen eines Werkzeuges gesteuert werden können.

Der zum Schwenkantrieb der Schwinge 7 erforderliche Antriebsmotor 11 befindet sich in einer Gegengewichtslage zum Ausleger 9, bezogen auf die Schwenkachse 8. Dieser Antriebsmotor 11 ist am Gehäuse 52 der Schwinge 7 angeflanscht. Der zum Schwenkantrieb des Auslegers 9 erforderliche Antriebsmotor 13 ist nahe der Schwenkachse 8 angeordnet. Es hängt von der Gewichtsverteilung des Auslegers 9 und des Antriebsmotors 11 in Zusammenhang mit dem zugeordneten Hebelarm der Schwinge 7 ab, wo am besten die Lage des Antriebsmotors 13 plaziert werden kann. Bei Verwendung einer Einheits-Schwinge 7 in einem Roboter-Baukastensystem können unterschiedliche Auslegerlasten durch Zusatzgewichte ausgeglichen werden.

Außerdem zeigt die Fig. 1 symbolisch, daß zwischen den jeweiligen Antriebsmotoren 11, 13 und den zugeordneten Schwenkachsen 8, 10 jeweils eine Zwischenwelle 12, 14 vorgesehen ist, über die jeweils ein zweistufiger Antrieb geführt werden kann.

Im Beispiel der Fig. 2 ist gezeigt, daß die Schwinge 7 und der Ausleger 9 auch um vertikale oder — in Spezialfällen — schräge Achsen 8, 10 gelagert werden können. Die Art der Lagerung ergibt sich im wesentlichen aus der speziellen Aufgabenstellung für den Industrie-Roboter.

In Fig. 2 ist das Gestell 1 als Hubsäule ausgebildet, wobei der Motor 4 über ein Untersetzungsgetriebe eine nicht dargestellte Spindel antreibt, die sich längs der Achse 2 erstreckt. Über die Spindeldrehung wird eine Spindelmutter (nicht dargestellt), an der die Schwinge 7 gelagert ist, gehoben oder gesenkt.

In anderen Ausführungsbeispielen kann das Gestell 1 als ein- oder mehrachsig verfahrbarer und/oder verschwenkbarer, flurgebundener Schlitten, als Portal oder dgl. ausgebildet sein. Das Gestell kann aber auch unbeweglich sein und z. B. nur aus einer Wand bestehen. In gleicher Weise ist auch der Ausleger 9 unterschiedlich gestaltbar und kann verschiedenste Werkzeuge oder auch weitere Ausleger führen. Der Industrie-Roboter ist für unterschiedlichste Einsatzzwecke geeignet und kann beliebig viele Achsen aufweisen. Die gezeigten Ausführungsformen sind als Leichtbau ausgeführt und eignen sich besonders als Montage- oder als leichte Schweißroboter. Zur Handhabung größerer Lasten kommen entsprechend angepaßte schwerere Ausführungsformen zum Einsatz.

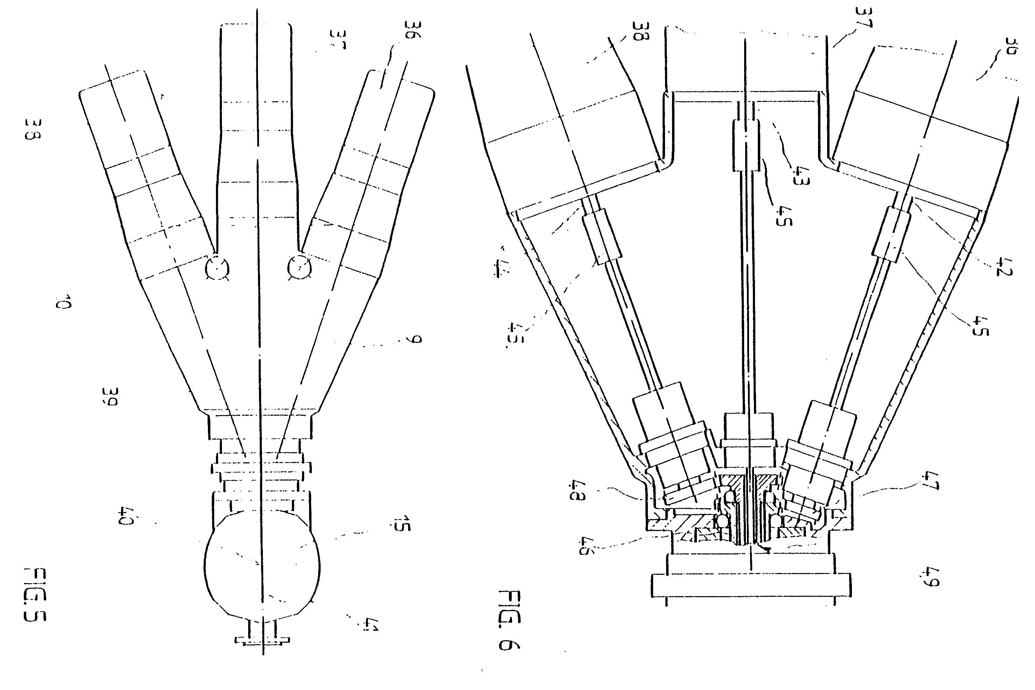

Aus dem Ausführungsbeispiel der Fig. 3 ergibt sich zunächst, daß die Schwinge 7 ein Gehäuse 52 aufweist. Dieses Gehäuse 52 ist fliegend an der Säule 1 gelagert 23. Ebenso ist der Ausleger 9 fliegend an der Schwinge 7 gelagert 24. Dadurch ergibt sich die Konsequenz, daß die Bewegungsebene des Auslegers 9 seitlich versetzt zur Bewegungsbene der Schwinge 7 liegt. Andererseits ergibt sich aber daraus der Vorteil, daß die Antriebsmotore 11, 13 an der der fliegenden Lagerung 23, 24 entgegengesetzten Seite der Schwinge 7 angeflanscht werden können. Es wird auf diese Weise ein freier Bewegungsraum für den Ausleger 9 gebildet, wobei — wie die Fig. 5 und 6 zeigen — die für weitere Achsen bestimmten Antriebsmotore 36, 37, 38 in der Bewegungsebene des Auslegers 9 fächerartig angeordnet werden können.

Innerhalb des Gehäuses 52 der Schwinge 7 sind beim Ausführungsbeispiel der Fig. 3 die kompletten Schwenkantriebe 16, 26 für die Schwenkbewegung der Schwinge 7 und des Auslegers 9 angeordnet. Die Schwenkantriebe 16, 26 sind gleich aufgebaut und bestehen jeweils aus den Antriebsmotoren 11, 13 sowie einem zweistufigen Getriebe 17, 20 und 27, 30. Die jeweils erste Getriebestufe ist als Zahnriementrieb 17, 27 ausgebildet, über den die Antriebsmotoren 11, 13 Zwischenräder 18, 28 antreiben, die auf Zwischenwellen 12, 14 sitzen. Auf den Zwischenwellen 12, 14 sitzt jeweils auf der Motorseite der Schwinge 7 ein Weggeber 22, der die Steuerimpulse auf den Antriebsmotor 11, 13 in bekannter Weise abgibt.

Im Ausführungsbeispiel der Fig. 3 ist auch die zweite Getriebestufe jeweils als Zahnriementrieb 20, 30 ausgeführt, der über ein Antriebsrad 19, 29 auf ein Abtriebsglied 21, 31 in Form eines Abtriebsrades treibt. Die Abtriebsglieder 21, 31 sind drehbar im Schwingengehäuse 52 gelagert und ragen auf der den Motoren 11, 13 gegenüberliegenden Seite aus dem Gehäuse 52. Wie aus Fig. 3 ersichtlich, weisen die Abtriebsglieder 21, 31 außenseitig jeweils einen Radflansch 51 und eine Zentrierung 50 auf, über die sie drehstarr mit der Säule 1 bzw. dem Gestell allgemein und dem Ausleger 9 verbunden, insbesondere verschraubt sind. Die Schraubverbindungen sind dabei durch die Säule 1 bzw. den Ausleger 9 zugänglich.

Das Gestell bzw. die Säule 1 sind je nach ihren eigenen Freiheitsgraden relativ oder absolut ortsfest. Die drehstarre Verbindung zwischen Abtriebsglied 21 und Säule bzw. Gestell 1 legt damit auch das Abtriebsglied 21 relativ oder absolut ortsfest. Das hat zur Folge, daß der Rahnriementrieb 20 um das feststehende Abtriebsglied 21 abwälzt und damit die Schwinge 7 um das Abtriebsglied 21 sowie um die Achse 3 dreht. Die fliegende Lagerung 23 der Schwinge 7 gegenüber der Säule 1 wird hierbei durch die Lagerung des Abtriebsgliedes 21 im Schwingengehäuse 52 gebildet.

Der Ausleger 9 ist gegenüber der Schwinge 7 frei relativ beweglich. Durch die drehstarre Verbindung zwischen Abtriebsglied 31 und Ausleger 9 wird letzterer bei Betätigung seines Schwenkantriebes 26 gedreht. Die Schwenkantriebe 16 und 26 sind damit zwar baugleich, wirken aber kinematisch umgekehrt.

Auch beim Ausleger 9 wird die fliegende Lagerung 24 durch das Lager des Abtriebsgliedes 31 im Schwingengehäuse 52 gebildet.

Die Spannung der Zahnriementriebe 17, 27 wird erfindungsgemäß dadurch gelöst, daß antriebsseitig die Motoren 11, 13 im Gehäuse 52 der Schwinge 7 verstellbar geführt sind. Dadurch wird allerdings nicht die Spannung der Riementriebe 20, 30 der jeweils zweiten Stufe beeinflußt. Um diese Spannung herbeizuführen, sind exzentrische Gehäuseteile 25 vorgesehen, in denen die Lager der Antriebsräder 19, 29 gelagert sind. Mit Hilfe dieser Exzentrizitäts-Verstellung läßt sich der Zahnriemen der zweiten Getriebestufe 20, 30 spannen. Da sich dadurch aber auch die Lage der Zwischenwelle 12 bzw. 14 ändert, wird erst daraufhin die Spannung des Zahnriementriebes 17, 27 der jeweils ersten Getriebestufe durch Verstellung der zugehörigen Antriebsmotore 11, 13 vorgenommen.

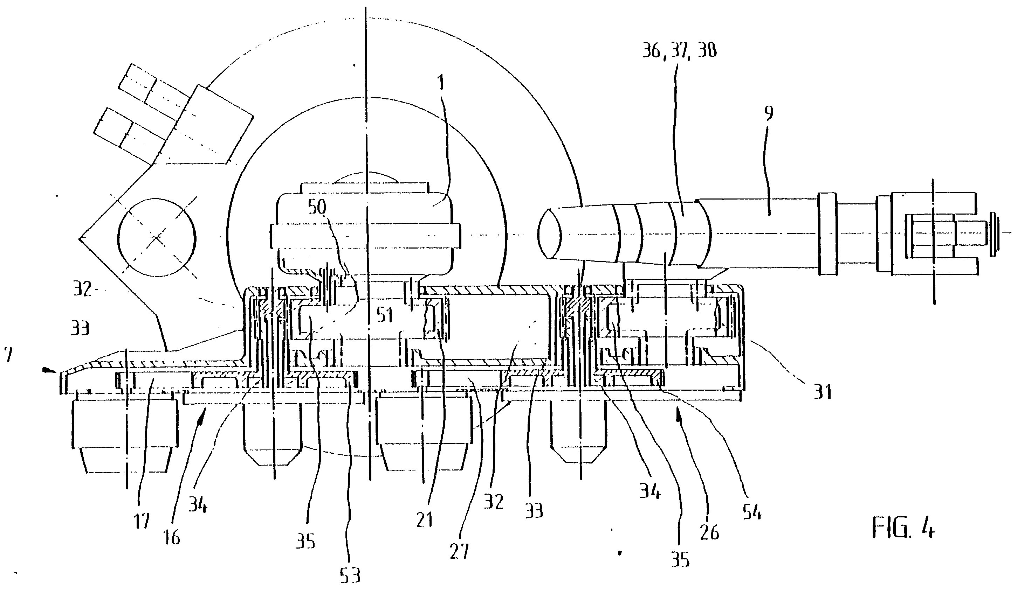

Beim Ausführungsbeispiel der Fig. 4 wird dargestellt, daß die zweite Getriebestufe für die Schwenkantriebe 16, 26 der Schwinge 7 und des Auslegers 9 auch durch ein Stahlgetriebe, nämlich ein Stirnzahnradgetriebe 35 gebildet werden kann. Hierbei sind zwei voneinander getrennte Ritzel 32, 33 vorgesehen, die mit Hilfe der Torsionsverspannung 34 relativ zueinander eingestellt werden können. Diese Torsionsverspannung hat gleichzeitig die Aufgabe, die Zwischenräder 53, 54, der Riementriebe 17, 27 zu befestigen. Beide Ritzel 32, 33 wirken jeweils in umgekehrter Richtung auf ihr zugehöriges Abtriebsrat 21, 31 ein, welches wiederum drehstarr mit der Säule 1 bzw. dem Ausleger 9 verbunden werden kann. Folglich wälzen sich beim Schwingen-Schwenkantrieb 16 die Ritzel 32, 33 an der Verzahnung des Abtriebsrades 21 ab und führen durch Reaktion zur Schwenkbewegung der Schwinge 7.

Weitere Einzelheiten dieser Antriebskonstruktion ergeben sich aus der DE-PS 33 08 413.

Die Figuren 5 und 6 zeigen nun eine eigentümliche Gestaltung des Auslegers 9, die eine Weitergestaltung der vorerwähnten Lehre enthält, ohne von dieser abhängig zu sein.

Wie bereits in Fig. 3 gezeigt, befindet sich der Ausleger 9 in einer fliegenden Lagerung zur Schwinge 7. Der Ausleger 9 weist aber eine Hand 15 auf, die durch eine, zwei oder drei Achsen gekennzeichnet sein kann. Es ist daher erforderlich, diese einzelnen Achsen anzutreiben.

Beim Ausführungsbeispiel der Erfindung sind die Antriebsmotore 36, 37 und 38 für diese Achsen unmittelbar am Ausleger 9 fächerartig so angeordnet, daß ihre Antriebsachsen in der Schwenkebene des Auslegers 9 liegen. Auf diese Weise wird erreicht, daß die Antriebsmotore 36, 37, 38 beim Schwenken des Auslegers 9 nicht mit der Schwinge 7 oder der Säule 1 und dgl. kollidieren. Im Beispiel der Fig. 5 ist symbolisch dargestellt, daß die sogenannte Hand 15 eine Schwenkachse 40 im Sinne einer Handwurzelachse und eine Drehachse 41 im Sinne einer Fingerdrehachse besitzt. Diese Drehachse 41 ist in der Streckstellung koaxial zur Drehachse 39, mit der die Hand 15 gegenüber dem Ausleger 9 verdrehbar ist.

Im Beispiel der Fig. 6 ist gezeigt, wie die Anordnung der Fig. 5 getriebetechnisch gelöst werden kann. Hierzu ist vorgesehen, daß die einzelnen Antriebswellen 42, 43, 44 der Antriebsmotore 36, 37, 38 mit Steckverbindungen 45 auf koaxiale Wellen führen. Es empfiehlt sich, daß der mittlere Antriebsmotor 37 mit seiner Antriebswelle 43 direkt auf den Trieb 46 einwirkt. Die beiden anderen Antriebsmotore 36 und 38 wirken über Winkeltrieb-Kegelradsätze 47, 48 auf zugeordnete Hohlwellen ein. Sämtliche Wellen bilden eine koaxiale Wellenanordnung 49, wie sie an sich bekannt ist.

Die erfindungsgemäße Konzeption hat den Vorteil, daß die zu bewegende Hand 15 in einem wesentlich größeren als bisher bekannten Bereich bewegt werden kann. Obendrein wird dieser Vorteil mit einer Getriebekonstruktion erreicht, die eine mannigfache Variierung des Manipulators zuläßt.

Stückliste

1 Gestell, Säule, Hubsäule
2 Vertikale Achse
3 Bodenteil
4 Antriebsmotor
5 Zwischenwelle
6 Weggeber
7 Schwinge
8 Schwenkachse
9 Ausleger
10 Schwenkachse
11 Antriebsmotor (Schwinge)
12 Zwischenwelle
13 Antriebsmotor (Ausleger)
14 Zwischenwelle
15 Hand

16 Schwenkantrieb (Schwinge)
17 Zahnriementrieb
18 Zwischenrad
19 Antriebsrad
20 Zahnriementrieb
21 Abtriebsglied, Abtriebsrad
22 Weggeber
23 fliegende Lagerung Schwinge
24 fliegende Lagerung Ausleger
25 exzentrisches Gehäuseteil
26 Schwenkantrieb (Ausleger)
27 Zahnriementrieb
28 Zwischenrad
29 Antriebsrad
30 Zahnriementrieb
31 Abtriebsglied, Abtriebsrad
32 Ritzel
33 Ritzel
34 Torsionsverspannung
35 Zahnradgetriebe
36 Antriebsmotor
37 Antriebsmotor
38 Antriebsmotor
39 Drehachse
40 Schwenkachse
41 Drehachse
42 Antriebswelle
43 Antriebswelle
44 Antriebswelle
45 Steckverbindung
46 direkter Trieb
47 Kegelradsatz
48 Kegelradsatz
49 koaxiale Wellenanordnung
50 Zentrierung
51 Radflansch
52 Gehäuse
53 Zwischenrad
54 Zwischenrad

**Patentansprüche**

1. Industrie-Roboter (Manipulator) für unterschiedliche Einsatzzwecke, bestehend aus einem Gestell (1), einer daran fliegend gelagerten Schwinge (7) und einem an der Schwinge (7) gelagerten Ausleger (9), deren Last gegenüber ihren Schwenkachsen (8, 10) statisch zumindest angenähert ausbalanciert ist, wobei die Antriebsmotore (11, 13) für den Schwingen-Schwenkantrieb (16) sowie für den Ausleger-Schwenkantrieb (26) an der Schwinge (7) angeordnet sind und das Abtriebsglied (21) des Schwingen-Schwenkantriebes (16) drehstarr mit dem Gestell (1) verbunden ist, dadurch gekennzeichnet, daß die Abtriebsräder (21, 31) beider Schwenkantriebe (16, 26) innerhalb eines die Schwinge (7) bildenden Gehäuses (52) gelagert sind und je einen die Wand des Gehäuses (52) durchgreifenden Radflansch (51) mit einer Zentrierung (50) zur drehstarren Befestigung mit dem Gestell (1) bzw. mit dem Ausleger (9) aufweisen.

2. Industrie-Roboter nach Anspruch 1, dadurch gekennzeichnet, daß die Schwenkantriebe (16, 26) der Schwinge (7) und des Auslegers (9) jeweils aus einem Motor (11, 13) und einem zumindest zweistufigen Getriebe bestehen, wobei zumindest die erste Getriebestufe aus einem Zahnriementrieb (17, 27) besteht.

3. Industrie-Roboter nach Anspruch 2, dadurch gekennzeichnet, daß beide Getriebe als zweistufige Zahnriementriebe (17, 20 und 27, 30) mit einer Zwischenwelle (12, 14) ausgebildet sind und daß die Zahnriementriebe (17, 20 und 27, 30) in einer gemeinsamen Ebene hintereinander angeordnet sind.

4. Industrie-Roboter nach Anspruch 3, dadurch gekennzeichnet, daß auf der Zwischenwelle (12, 14) der Weggeber (22) für die Steuerung des der Zwischenwelle zugeordneten Schwenkantriebes (16, 26) angeordnet ist.

5. Industrie-Roboter nach Anspruch 3 oder 4, dadurch gekennzeichnet, daß die Zwischenwellen (12, 14) jeweils in einem gegenüber dem Schwingen-Gehäuse (52) exzentrisch verstellbaren Gehäuseteil (25) gelagert und die exzentrische Verstellung als Mittel zum Spannen des Zahnriementriebes (20, 30) vorgesehen ist.

6. Industrie-Roboter nach Anspruch 2 oder folgenden, dadurch gekennzeichnet, daß die jeweils zweite Getriebstufe als Zahnradgetriebe (35) ausgebildet und mit einer an sich vorgeschlagenen Anordnung (32, 33, 34) zum Spielausgleich der Verzahnung in Verbindung mit geteilten, gegeneinander torsionsverspannten Antriebsritzeln (32, 33) ausgestattet ist.

7. Industrie-Roboter nach Anspruch 1 oder einem der folgenden, dadurch gekennzeichnet, daß die Abtriebsglieder (21, 31) der Schwenkantriebe (16, 26) für die Schwinge (7) bzw. den Ausleger (9) hohl ausgebildet und als Durchlaß für Kraft- und Steuerleitungen, Werkzeuge und dgl. gestaltet sind.

8. Industrie-Roboter nach Anspruch 1 oder einem der folgenden, dadurch gekennzeichnet, daß die Schwinge (7) über die Verteilung der Antriebsmotoren (11, 13) ausbalanciert ist, wobei der Antriebsmotor (13) für den Ausleger (9) nahe der Schwenkachse (8) der Schwinge (7) angeordnet ist.

9. Industrie-Roboter nach Anspruch 1, dadurch gekennzeichnet, daß die Schwinge (7) am Gestell (1) und der Ausleger (9) an der Schwinge (7) fliegend gelagert (23, 24) sind.

10. Industrie-Roboter nach Anspruch 9, dadurch gekennzeichnet, daß die Lagerstellen (23, 24) gemeinsam auf der einen Seite der Schwinge (7) und die Antriebsmotoren (11, 13) auf der gegenüberliegenden Seite der Schwinge (7) angeordnet sind.

11. Industrie-Roboter, insbesondere nach Anspruch 1 oder einem der folgenden, dadurch gekennzeichnet, daß der Ausleger (9) fächerartig angeordnete Antriebsmotore (36, 37, 38) für den Antrieb der am Ausleger (9) angeordneten weiteren Achsen (39, 40, 41) aufweist, wobei die Antriebsachsen der Motoren sich in der Schwenkebene des Auslegers (9) befinden.

## Claims

1. An industrial robot (manipulator) for different applications, comprising a support (1), a swing arm (7) which is mounted in an overhung position on the support (1) and a boom (9) mounted on the swing arm (7), the weight of the swing arm (7) and the boom (9) being at least approximately statically counterbalanced relative to their pivot axes (8, 10), the drive motors (11, 13) for the swing arm pivot drive (16) and for the boom pivot drive (26) being arranged on the swing arm (7) and the output member (21) of the swing arm pivot drive (16) being rotationally rigidly connected with the support (1), characterised in that the drive gears (21, 31) of both pivot drives (16, 26) are mounted within a housing (52) forming the swing arm (7) and each comprise a gear flange (51) penetrating through the wall of the housing (52) with a centring (50) for the rotationally rigid securing to the support (1) and boom (9) respectively.

2. An industrial robot according to claim 1, characterised in that the pivot drives (16, 26) of the swing arm (7) and the boom (9) are each formed by a motor (11, 13) and a transmission with at least two stages, at least the first transmission stage being formed by a toothed belt drive (17, 27).

3. An industrial robot according to claim 2, characterised in that both transmissions are designed as two-stage toothed belt drives (17, 20 and 27, 30) with an intermediate shaft (12, 14) and in that the toothed belt drive (17, 20 and 27, 30) are arranged one behind the other in a common plane.

4. An industrial robot according to claim 3, characterised in that the motion pickup (22) for the control of the pivot drive (16, 26) associated with the intermediate shaft (12, 14) is arranged on said intermediate shaft.

5. An industrial robot according to claim 3 or 4, characterised in that the intermediate shafts (12, 14) are each mounted in a housing part (25) which can be eccentrically adjusted relative to the swing arm housing (52) and the eccentric adjustment is provided as a means for tightening the toothed belt drive (20, 30).

6. An industrial robot according to claim 2 or any of the following claims, characterised in that the second transmission stage is designed in each case as a gear transmission (35) and is provided with an arrangement (32, 33, 34) proposed per se for compensating the clearance of the toothing in association with separated drive pinions (32, 33) which are torsionally stressed relative to one another.

7. An industrial robot according to claim 1 or one of the following claims, characterised in that the output members (21, 31) of the pivot drives (16, 26) for the swing arm (7) and the boom (9) respectively are hollow and are designed as openings for power and control lines, tools and the like.

8. An industrial robot according to claim 1 or one of the following claims, characterised in that the swing arm (7) is counterbalanced by the distribution of the drive motors (11, 13), the drive motor (13) for the boom (9) being arranged in the vicinity of the pivot axis (8) of the swing arm (7).

9. An industrial robot according to claim 1, characterised in that the swing arm (7) is mounted in an overhung position on the support (1) and the boom (9) is mounted in an overhung position on the swing arm (7).

10. An industrial robot according to claim 9, characterised in that the mounting points (23, 24) are both arranged on one side of the swing arm (7) and the drive motors (11, 13) are arranged on the opposite side of the swing arm (7).

11. An industrial robot according to claim 1 or one of the following claims, characterised in that the boom (9) comprises drive motors (36, 37, 38) arranged in the manner of a fan for the drive of the further axles (39, 40, 41) arranged on the boom (9), the drive axles of the motors lying in the pivot plane of the boom (9).

## Revendications

1. Robot industriel (manipulateur) destiné à être appliqué à des fins différentes et constitué d'un bâti (1), d'un bras oscillant (7) qui y est monté en porte-à-faux et d'un bras en console (9) monté sur le bras oscillant (7), dont la charge par rapport à leurs axes de rotation (8, 10) est au moins à peu près compensée statiquement, les moteurs d'entraînement (11, 13) pour le dispositif d'entraînement en oscillation-pivotement (16) ainsi que le dispositif d'entraînement en rotation du bras en console (26) étant montés sur le bras oscillant (7) et l'élément mené (21) du dispositif d'entraînement en oscillation-pivotement (16) est relié, sans possibilité de tourner, au bâti (1), caractérisé en ce que les roues menées (21, 31) des deux dispositifs d'entraînement en rotation (16, 26) sont montées dans un caisson (52) formant le bras oscillant (7) et comportant chacune un boudin de roue (51) traversant la paroi du caisson (52) et ayant un dispositif de centrage (50) pour la fixation, sans possibilité de tourner, au bâti (1) et au bras de console (9).

2. Robot industriel suivant la revendication 1, caractérisé en ce que les dispositifs d'entraînement en rotation (16, 26) du bras oscillant (7) et du bras en console (9) sont constitués, chacun, d'un moteur (11, 13) et d'une transmission à au moins deux étages, au moins le premier étage de la transmission étant constitué d'une transmission à courroie dentée (17, 27).

3. Robot industriel suivant la revendication 2, caractérisé en ce que les deux transmissions sont constituées en transmission à courroie dentée (17, 20 et 27, 30) à deux étages ayant un arbre intermédiaire (12, 14), et en ce que les transmissions à courroie dentée (17, 20 et 27, 30) sont disposées l'une derrière l'autre dans un plan commun.

4. Robot industriel suivant la revendication 3, caractérisé en ce que, sur l'arbre intermédiaire (12, 14), est monté l'indicateur de trajet (22) pour la commande du dispositif d'entraînement en rotation (16, 26) associé à l'arbre intermédiaire.

5. Robot industriel suivant la revendication 3 ou 4, caractérisé en ce que l'arbre intermédiaire (12, 14) est monté dans une partie du caisson (25) déplaçable de manière excentrée par rapport au caisson (52) du bras oscillant, et le déplacement excentré est prévu comme moyen pour tendre la transmission à courroie dentée (20, 30).

6. Robot industriel suivant la revendication 2 ou les revendications suivantes, caractérisé en ce que le second étage de transmission est constitué en engrenages (35) et est muni d'un dispositif (32, 33, 34) déjà proposé en soi, de compensation du jeu de la denture en liaison avec des pignons d'entraînement (32, 33) subdivisés et bloqués en torsion l'un par rapport à l'autre.

7. Robot industriel suivant la revendication 1 ou l'une des revendications suivantes, caractérisé en ce que les éléments menés (21, 23) des dispositifs d'entraînement en rotation (16, 26) du bras oscillant (7) et du bras en console (9) sont creux et sont conformés en passages pour des conducteurs de puissance et de commande pour des outils et des éléments analogues.

8. Robot industriel suivant la revendication 1 ou l'une des revendications suivantes, caractérisé en ce que le bras oscillant (7) est équilibré par la répartition des moteurs d'entraînement (11, 13), le moteur d'entraînement (13) du bras en console (9) étant monté à proximité de l'axe de rotation (8) du bras oscillant (7).

9. Robot industriel suivant la revendication 1, caractérisé en ce que le bras oscillant (7) est monté en porte-à-faux (23) sur le bâti (1), et le bras en console (9) est monté en porte-à-faux (24) sur le bras oscillant (7).

10. Robot industriel suivant la revendication 9, caractérisé en ce que les emplacements de paliers (23, 24) sont disposés en commun d'un côté du bras oscillant (7) et les moteurs d'entraînement (11, 13) sont disposés du côté opposé du bras oscillant (7).

11. Robot industriel, notamment suivant la revendication 1 ou l'une des revendications suivantes, caractérisé en ce que le bras en console (9) comporte des moteurs d'entraînement (36, 37, 38) qui sont disposés en éventail et qui sont destinés à l'entraînement des autres axes (39, 40, 41) montés sur le bras en console (9), les axes d'entraînement des moteurs se trouvant dans le plan de rotation du bras en console (9).

FIG. 1

FIG. 2

FIG. 3

FIG. 4

FIG. 6

FIG. 5